# EUROPEAN PATENT APPLICATION

(11) **EP 4 645 266 A1**
(43) Date of publication of application: **05.11.2025**
(21) Application number: 25172207.0
(22) Date of filing: 24.04.2025
(51) Int. Cl.: G06V 20/70, G06V 10/80

(54) **SYSTEM FOR FOR GENERATING INFORMATION ON A REAL WORLD SCENE**

(30) Priority: 30.04.2024 EP 24173306; 11.04.2025 US 202519176164
(71) Applicant: HONDA MOTOR CO., LTD., Tokyo 105-8404 (JP)
(72) Inventor: Deigmoeller, Joerg, 63073 Offenbach/Main (DE); Franzius, Mathias, 63073 Offenbach/Main (DE); Eggert, Julian, 63073 Offenbach/Main (DE); Ocker, Felix, 63073 Offenbach/Main (DE); Gienger, Michael, 63073 Offenbach/Main (DE); Dariush, Behzad, San Jose, CA 95134 (US); Agarwal, Nakul, San Jose, CA 95134 (US); Ghoddoosian, Reza, San Jose, CA 95134 (US)
(74) Representative: Roth, Sebastian

(57) **Abstract**

The invention is related to a system (1) for analyzing an image of a real world scene, the system (1) comprising image providing means (13) for obtaining the image of the real world scene, a large multimodal model LMM module (11) providing a large language model LLM functionality and a visual language model VLM functionality, wherein the LMM module (11) is configured to analyze the image using its VLM functionality for generating a first scene description of the received image, a structured memory (12) for storing real world information, wherein the structured memory (12) is connected to the LMM module (11) and configured to generate a second scene description of the received image based on the stored real world information and to provide the description to the LMM module (11), wherein the LMM module (11) is configured to identify differences between the first scene description and the second scene description and to generate an enhanced scene description based on the identified mismatches.

## Description

The present invention regards a system for analyzing an image of a real world scene to generate information of the real world scene

Real-world scene recognition states a demanding requirement for a variety of systems. In particular, autonomous systems require a sufficient situation awareness based on the scene recognition for performing certain tasks. Such tasks may include grasping, pushing, pouring, placing or moving. Previous scene recognition approaches were based on computer vision implementation, partly coupled with neural networks for using image recognition in order to interpret the real-world scenario. However, these approaches were mainly focused on specific tasks, such that for variable tasks, a great amount of trained models would have been necessary for scene recognition. This is a rather complex and time- and energy demanding task. Furthermore, autonomous systems are increasingly used in complex environments that often do not fully cover the knowledge to which the neural network has been trained such that the previous approaches fail to work properly.

Nowadays, Large Multimodal Models (LLMs) are commonly used for scene recognition. LLMs combine the abilities of Visual Language Models (VLMs) and Large Language Models (LLMs), resulting in an impressive performance in terms of context understanding for scene recognition. For instance, ChatGPT is a well-known LLM, which enables image analysis by its VLM functionality combined with a natural language dialog management provided by the LLM functionality. Moreover, having the ability to extract information from images via natural language queries is also of great interest for autonomous systems for making their environment accessible and interpretable. That means, LMM can translate observations, coming in from recognition modules, into a computational format for the robot.

US 2022/0019734 A1 discloses a method that converts visual information of an input image into a format that a contextual language model reasoner understands and accepts for a downstream task. The contextual language model reasoner outputs, based on the input image and external supporting knowledge, contextual embeddings based on which downstream tasks can be performed with an increased contextual understanding. The downstream tasks may be scene understanding, visual question answering or visual common sense reasoning among others.

CN 114842368 A discloses acquiring an image of a scene where a target object is located. Image features are extracted from the image and a question text associated with the scene is acquired thereby leveraging capabilities of LLM and VLM functionality. Visual auxiliary information based on the image features and the question text are determined.

State of the art approaches focus on a feed forward recognition pipeline. This means that information from a vision module is embedded into a context to infer missing information or trigger further actions.

However, the improvement of contextual understanding is still limited by the obtained real-world image. Thus, in case the real-world image is rather complex to analyze, e.g. due to its low quality or rather complex scenario, the performance of the image analysis is expected to be rather bad. For instance, it is possible that due to movement of an object, scene information is lost that would otherwise originate from the area that has been covered by the moving object.

In addition, the models still perform short-term analysis with rather unstructured information. Thus, it is rather hard for the state of the art approaches to reconsider past observations in an efficient way.

In order to overcome the above mentioned objective technical problems, the present invention provides a system, and an assistance system or a robot including said system according to the enclosed independent claims. The invention is defined in the appended claims. Advantageous features of the present invention are defined in the corresponding dependent claims.

A System for analyzing an image of a real world scene comprises image providing means for obtaining the image of the real world scene, an LMM module providing LLM functionality and VLM functionality, wherein the LMM is configured to analyze the image using its VLM functionality for generating a first scene description of the received image, a structured memory for storing real world information, wherein the structured memory is connected to the LMM module and configured to generate a second scene description of the received image based on the stored real world information and to provide the description to the LMM module, wherein the LMM module is configured to identify differences between the first scene description and the second scene description and to generate an enhanced scene description based on the identified mismatches.

The image of the real world may be understood to be an image representing the real world scene in a two dimensional projection. Preferably, the projection may be obtained from using an optical apparatus, e.g. a camera, to project incoming light or invisible electromagnetic waves for humans onto a corresponding sensor. In particular, such a sensor could be sensitive to the visible light range or to the infrared light range among others. Additionally or alternatively, the projection may be obtained through a LIDAR system that performs a three dimensional mapping of the real world scenario, yet a two dimensional projection of this mapped real world scenario could be understood as the image. Preferably, the image is a RGB image captured by a camera. Additionally or alternatively, the optical apparatus is a RGB-D camera. Additionally or alternatively, the image of the real world is included in an additional image, comprising the image of the real world scene and semantic information of the real world scene.

The semantic information may include information about actions and/or objects and/or agents detected in the real world scene.

The agent detection may detect the persons that are included in the real world scene.

The semantic information comprised in the additional image may be indicated within the image of the real world scene. For instance, bounding boxes could be used in combination with labels to indicate a person's ID (like a name) and/or an objects name and/or an action performed by a person.

Additionally or alternatively, the semantic information may be provided to use the description of a person and/or an object and/or an action in line with the real world information stored in the structured memory. For instance, the same ID for a person is used in the semantic information of the additional image. A picture of the person associated with the person's ID may be stored in the structured memory for re-identification.

Additionally or alternatively, the semantic information may be obtained by an algorithm or method performed on a processor that is capable of extracting semantic information of a real world image. Additionally or alternatively, such an algorithm or method may be a classical computer vision algorithm or method. Additionally or alternatively, such an algorithm or method may be a classical computer vision algorithm combined with the LMM functionality.

The source for providing the image is referred to as image providing means. As mentioned before, the image providing means may preferably be realized as a camera. Alternatively, it could be realized by a non-visible light-/electromagnetic wave- sensor, like an infrared sensor. Alternatively, it could be realized as a LIDAR system.

The LMM processes at least image and/or text input. Additionally, the LMM may process multiple additional types of data modalities, like video and audio inputs. It is to be noted that the LLM may be in an integrated module including the LLM functionality and the VLM functionality.

The LMM may be based on a foundation model that enables LMM functionality like the current version of ChatGPT, CLIP, COCA, VLMo, BLIP, BEITv3 or the like. Those models are generally pre-trained, for example, zero-shot learning is a well-known machine learning technique. Moreover, transfer learning techniques to fine-tune the models for more specific tasks may be used. However, any LMM that provides its well-defined functionality could be used.

The LMM module acts as a central controller of information flow and information gathering. The LMM module provides the VLM functionality and the LLM functionality. Preferably, the LMM module combines the VLM functionality and the LLM functionality as it is known for example from systems such as ChatGPT. Alternatively, it is also possible to provide a separate VLM module interacting with an LLM module and the combination of the VLM module and the LLM module constitute the LMM module in the sense of the present invention. For simplicity, we focus on the integrated case for further explanation of the present invention.

Additionally or alternatively, the LMM module is configured to obtain the second scene description from the structured memory. Additionally, or alternatively, the LMM is configured to obtain an image from the source for obtaining an image. Additionally or alternatively, the LMM is configured to obtain multiple additional data modalities through an interface. The interface may be a CPU that runs a program for automatically providing the data modalities. Additionally or alternatively, the data modalities may be obtained from an HMI module.

The LMM module may particularly be realized by software executed on a Central Processing Unit (CPU), a Graphics Processing Unit (GPU), or the like.

The first scene description is understood to be the output of the module providing the VLM functionality applied on the provided image within the LMM module. Thus, the first scene description is not to be confused with the output of the LMM module. Generally, the output of the module providing the VLM functionality is provided to the LLM functionality of the LMM module. For instance, the first scene description may refer to the result provided by the VLM functionality in form of image tokens or embeddings for inputting the corresponding image. Hence, the first scene description may refer to a textual or numerical description. Preferably, the first scene description is a textual description.

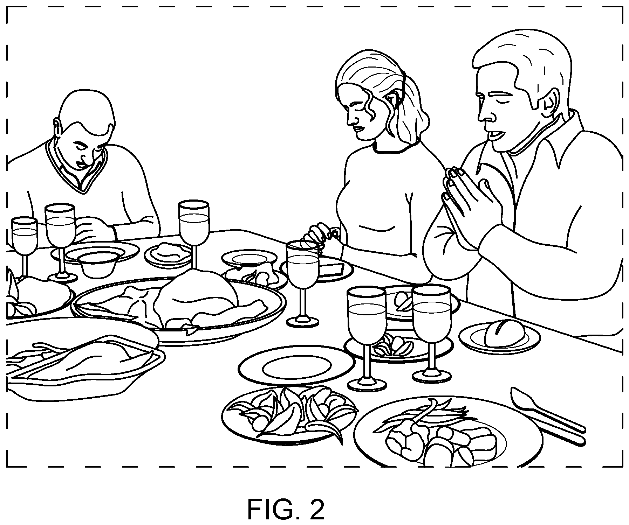

The second scene description is understood to be an output of the structured memory. The second scene description refers to a scene description independent of the output of the LMM module and any of the VLM functionality and the LMM functionality. The second scene description is based on past measurements or latest observations which are stored in the structured memory. Preferably, the second scene description is structured, such that it contains information that refers to an object of the scene. Additionally or alternatively, the second scene description includes semantic and/or metric information for structuring the information. Additionally or alternatively, the second scene description may be a textual description like the following example in which persons and objects are identified with the position and size in a real world scene, depicted in figure 2.

| |
|---|
| [ |
| {"greg": {"point_centre": [43, 74], "radius": 7}}, |
| {"pam": {"point_centre": [81, 74], "radius": 7}}, |
| {"jack": {"point_centre": [108, 43], "radius": 7}}, |
| {"table": {"point_top_left": [22, 24], "point_bottom_right": [96, 62]}}, |
| {"plate": {"point_centre": [32, 46], "radius": 6}}, |
| {"plate": ("point_centre": [43, 55], "radius": 6}}, |
| {"plate": ("point_centre": [80, 55], "radius": 6}}, |
| {"plate": {"point_centre": [89, 44], "radius": 6}}, |
| {"bun": {"point_centre": [31, 49], "radius": 3}}, |
| {"glass": {"point_centre": [51, 46], "radius": 3}}, |
| {"glass": {"point_centre": [73, 46], "radius": 3}}, |
| ] |

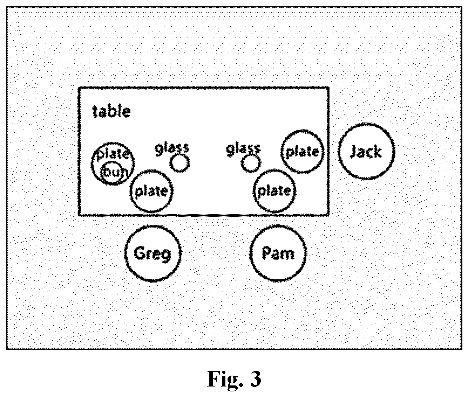

Additionally or alternatively, the second scene description could be generated as a scene layout, based on the memorized knowledge, as shown in figure 3. It is to be noted that the examples given in figure 2 and figure 3 will be explained in greater detail below.

The scene layout is understood to be a figure that provides a schematic representation of the scene. Preferably, the layout provides labeled information accompanied with position and size indicators that all refer to a single object recognized in the corresponding scene. Additionally or alternatively, the labels are provided within shapes of particular size and position. Preferably, the shape is related to the recognized object. Preferably, the shapes of complex shaped objects is illustrated as circles of particular radii. Preferably, the radii and/or size of the object express qualitatively or quantitatively the proportional difference in size. Preferably, the positions express qualitatively or quantitatively the proportional difference in position. Additionally or alternatively, the scene layout is a top view of the scene. Additionally or alternatively, the scene layout is a top view drawing of 3D object poses and shapes seen in an image, provided by the structured memory.

Semantic information refers to meaningful, context-aware information. In particular, structured information has to be distinguished from raw or unstructured data, like numbers, strings or the like. Semantic information carries a layer of meaning that allows a program or autonomous system to interpret its relevance and context. This enables higher-level reasoning, adaptability and intelligent behavior. Preferably, the semantic information includes textual descriptions and metric information accompanied with the contextual meaning of the metric for the recognized object.

Structured information and sematic information shall be understood as synonyms.

Metric information refers to the geometrical proportions of the recognized object and its proportions compared to the environment. Preferably, the metric information include the size and center point of an object. Preferably, the size is expressed by a radius value.

The structured memory stores real world information in a structured manner. Preferably, any information is stored in a structured manner. The real world information may be any information that enables the generation of a second scene description. Additionally or alternatively, the structured memory stores prior information, world knowledge, task knowledge or general priors. Additionally or alternatively, the structured memory generates the second scene description based on its stored information and the position and orientation from which the image have been obtained that is also provided to the LMM module to generate the first scene description. Additionally or alternatively, the structured memory is configured to update its stored information based on an update instruction provided by the LMM module. Additionally or alternatively, the structured memory provides data to the LMM module in response to a request obtained from the LMM module.

The structured memory may include any device for storing information electrically. In particular, the structured memory may include a flash memory, a Random Access Memory (RAM), a Read-Only Memory (ROM), a Hard Disk Drive (HDD), hybrid drives, Non-Volatile RAM (NVRAM) or cloud storage.

An advantageous effect of the foregoing embodiment is that an enhanced scene description is obtained taking into account two separate scene description sources. Moreover, information of past observations as well as of current observations is considered for the scene recognition.

The enhanced scene description is understood to include more and/or refined information as the separate first or second scene description. Preferably, the enhanced scene description is a textual description. Additionally or alternatively, the enhanced scene description at least partly includes semantic information.

The differences refer to any kind of differences that are identified based on a comparison between the first scene description and the second scene description. Preferably, differences refer to mismatches or missing scene elements. Additionally or alternatively, differences may refer to mismatches of the first scene description and the semantic information of the second scene description. Additionally or alternatively, differences may refer to metric information differences.

In an embodiment of the system, the generation of the first scene description is based on the image and an additional image, comprising the image of the real world scene and semantic information of the real world scene.

An advantageous effect of the foregoing embodiment is that the VLM functionality is supported to understand the context of the real world scene, hence the quality of the first scene description is improved.In an embodiment of the system, the LMM module is further configured to update semantic and/or metric information of the identified mismatches in the enhanced description.

Additionally, the LMM module is further configured to update any information of the identified mismatches that is retrievable by the LMM module in the enhanced description.

Additionally or alternatively, the LMM module is configured to retrieve information that corresponds to the identified mismatches. Preferably, the information is semantic and/or metric information. The information may be retrieved from at least one of the first and second scene description. Additionally, the information may be retrieved from further information from the VLM functionality and/or the structured memory.

An advantageous effect of the foregoing embodiment is that structured information is updated for the identified mismatches.

In an embodiment of the system, the LMM module is further configured to initiate the generation of the first scene description and the generation of the enhanced scene description by textual instructions provided to the module providing the LLM functionality.

Preferably, the textual instructions are textual descriptions using natural language.

An advantageous effect of the foregoing example is that the LLM functionality may be used for interpreting textual information as instructions to initiate the scene recognition.

In an embodiment of the system, the LMM module is further configured to request further information from the VLM functionality and/or the structured memory and to include this further information in the generation of the enhanced scene description.

Requesting further information from the VLM functionality may be performed by additional prompts provided to the LMM module and in particular for its LLM functionality.

Requesting further information from the structured memory may be performed by using outputs of the LLM functionality. Preferably, the system provides means for enabling the structured memory to process the instructions provided by the LMM module. For instance, the structured memory could use the LLM functionality of the LMM module or a separate LMM functionality in order to translate the instructions provided by the LMM module to being able to process these instructions. For instance, the LLM functionality may be provided with examples for valid instructions.

Additionally or alternatively, the further information is provided or processed to be in a structured manner.

An advantageous effect of the foregoing example is that the LMM module is capable of obtaining additional information to support the generation of the enhanced scene description.

In an embodiment of the system, the LMM module is further configured to request further information from the VLM functionality and/or the structured memory until the generated enhanced scene description to which this further information is included is consistent with the first scene description or until said enhanced scene description is sufficient for performing a certain task by a robot.

The task can be at least one of grasping, pouring, placing or moving.

An advantageous effect of the foregoing example is that the LMM module may refine the enhanced scene description in multiple iterations until a predefined termination criterion is met.

In an embodiment of the foregoing system, the LMM module is configured to provide the enhanced scene description to the structured memory to update the stored real world information.

An advantageous effect of the foregoing example is that a long term storage of past observations is obtained in a structured manner.

In an embodiment of the foregoing system, the structured memory is further configured to store task information for performing a certain task by a robot.

An advantageous effect of the foregoing example is that task information may be provided to the LLM module, by e.g. a certain request.

In an embodiment of the foregoing system, the image providing means is a camera.

An advantageous effect of the foregoing example is that a camera may be used for providing the image.

In an embodiment of the foregoing system, the system further comprises a localization module providing at least position information and preferably also orientation information of the camera.

The localization module may be a module that is configured to estimate the pose of the camera based on the received image by the source for providing the image. For instance, the module may be configured to use common computer vision functionality to estimate a pose.

An advantageous effect of the foregoing example is that a pose estimation may be determined based on the camera location information.

In an embodiment of the foregoing system, the structured memory is further configured to generate the second scene description additionally based on the position information and orientation information of the camera.

An advantageous effect of the foregoing example is that the stored real world information related to the corresponding pose of the camera can be used for scene description.

In an embodiment of the foregoing system, the second scene description includes a textual description and/or a scene layout.

Preferably, the textual description is a structured text that enables the structured memory to obtain semantic information.

An advantageous effect of the foregoing example is that the second scene description may be represented by an image and/or text.

In an embodiment of the foregoing system, the textual description and/or the scene layout include metric and/or semantic information.

An advantageous effect of the foregoing example is that the second scene description includes structured information.

In an embodiment of the foregoing system, the first scene description includes a textual description.

An advantageous effect of the foregoing example is that the first scene description is interpretable by the LLM functionality.

In an embodiment of the foregoing example, the LMM module is configured to translate received images and/or scene layouts in case that the second scene description includes a scene layout into text information using its VLM functionality.

An advantageous effect of the foregoing example is that the received images and/or scene layouts are made interpretable by the LLM functionality.

An Assistance system or robot includes any of the foregoing embodiments of the system.

The advantageous effects for the corresponding features correspond to the ones described above for the system.

In the following, preferred embodiments of the present application shall be described in more detail based on the corresponding figures.
Figure 1 is a schematic view of the system for analyzing an image of a real world scene.
Figure 2 is an image of a real world scene.
Figure 3 is a scene layout.

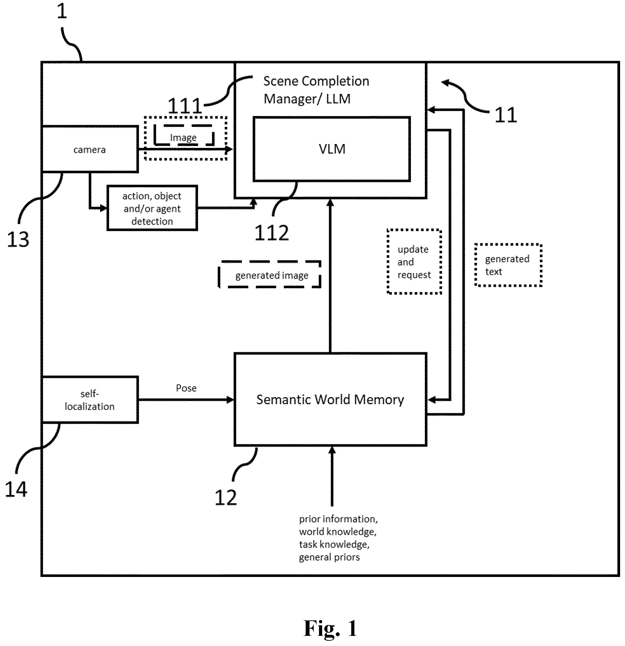

Figure 1 is a schematic view of the system 1 for analyzing an image of the real world scene. The system 1 comprises a LMM module 11 (Scene Completion Manager), a semantic world memory 12, a camera 13 and a self-localization module 14.

It should be noted that the semantic world memory 12 corresponds to an embodiment of the structured memory as described before. The camera 13 corresponds to an embodiment of the image providing means as described before.

Unless otherwise stated, the aforementioned description of the features of each corresponding entity also apply to the entities in Figure 1, such that a repetitive description is avoided.

The system 1 may be included in an assistance system or a robot.

The LMM module 11 comprises an LLM module 111 with LLM functionality and a VLM module 112 with VLM functionality. Preferably, these modules are integrated within one chip.

The LMM module 11 may be a CPU or a GPU with enhanced performance for artificial intelligence (AI) applications.

The LMM module 11 may obtain an RGB image from the camera 13.

The LMM module may obtain an image from the semantic world memory 12.

The LMM module 11 may obtain generated text from the semantic world memory 12.

The camera 13 may be an optical camera for providing an RGB image of the real world scene.

The camera 13 may provide an RGB image to the LMM module 11.

The self-localization module 14 may particularly be realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

The semantic world memory 12 may obtain update instructions and/or requests from the LMM module 11.

The semantic world memory 12 may generate an image and/or text an provide it to the LMM module 11.

The semantic world memory 12 stores real world information from past observations.

The semantic world memory 12 generates a scene description of the image provided by the camera 13 as generated image and/or generated text.

The semantic world memory 12 stores at least one of prior information, world knowledge, task knowledge and general priors.

In particular, the self-localization module 14 may perform pose estimation algorithms for estimating a pose based on the image provided by the camera 13.

The self-localization module 14 may provide a pose comprising position information and orientation information of the camera 13 at a time at which the image has been taken by the camera 13.

Internally, each module may be electrically connected to any of the other modules, which is not shown explicitly. The displayed arrows show the preferred information flow and its direction. The connection may be realized by an internal data exchange link. The internal data exchange link may be any one of Inter-Integrated Circuit (I2C), Serial Peripheral Interface (SPI), Universal Asynchronous Receiver/Transmitter (UART), Controller Area Network (CAN), Universal Serial Bus (USB), General Purpose Input/Output (GPIO), Peripheral Component Interconnect Express (PCIe) or Ethernet.

In particular, the system 1 for analyzing an image of a real world scene performs a scene completion task. The scene completion task will be explained on the bases of the system 1 in the following.

An example for such a completion task could be as follows, where on the left hand-side is always the instruction to the LLM functionality after each step and to the right is the feedback or action the LLM module 111 executes. The two images referred to are the captured image of a real world scene by the camera 13 as shown in figure 2 and the scene layout provided by the semantic world memory 12 as shown in figure 3. However, the image by the camera could also be preprocessed by an action, object and/or agent detection block as shown in figure 1 before being provided to the LLM module 111.

For generating the first scene description either the image is directly provided to the LMM module 111 or it is preprocessed by the action, object and/or agent detection block. The main functionality of the action, object and agent detection has already been discussed above. In particular, this block is used to include semantic information in the real world image. Alterantively or additionally, for generating the first scene description both the image and the image after being processed by said detection block is used.

The following example is provided for the case in which merely the image of the real world scene is provided to the LMM module 111. However, all features that apply to this method would also be valid for the method where either the processed image is provided to the LMM module 111 or a combination of the image and the processed image would be provided to the LMM 111.

### First Iteration:

This part refers to the arrows in the system overview shown in figure 1 highlighted by the dashed rectangles.

| **Scene Completion Manager Instruction** | **Scene Completion Manager Result** |
|---|---|
| You are a *Scene Completion Manager. I* provide you now two images. To the left is an RGB image taken by a camera. To the right is a top view drawing of 3D object poses and shapes seen in the RGB image, provided by a *Semantic World Memory.* | **Plates:** In the RGB image, we can see plates in front of each person. These cor^{_5} respond to the plates indicated on the diagram. |
| | **Glasses:** Each setting in the RGB image appears to have a glass, which also matches the diagram. |
| Can you align the labels with the elements seen in the images? | **Greg:** The person seated on the left in the RGB image is labeled as "Greg" in the diagram. |
| | **Pam:** The person in the middle of the RGB image is labeled as "Pam" in the diagram. |
| | **Jack:** The person on the right of the RGB image is labeled as "Jack" in the diagram. |

### Second Iteration:

This part refers to the arrows in the system overview shown in figure 1 highlighted by the dotted rectangles.

| **Scene Completion Manager Instruction** | **Scene Completion Manager Result** |
|---|---|
| Please complete missing elements in the *Semantic World Memory* by comparing the labels with the RGB image. Please guess the 3D positions of missing elements and extend the *Semantic World Memory.* If required, you can request further information from the *Semantic World Memory* through the query interface. | The Semantic World Memory has been updated with estimated positions for the missing elements. Here are the new elements added with their respective positions and sizes: |
| | # Adding a new glass for "Greg" world_mem.append({"glass": {"point_centre": [35, 74], "radius": 3}}) |
| | # Adding a new glass for "Pam" world _mem.append({"glass": {"point_centre": [87, 74], "radius": 3}}) |
| | # Adding a new glass for "Jack" world_mem.append({"glass": {"point_centre": [114, 43], "radius": 3}}) |
| | # Adding a missing bun near "Pam" world_mem.append({"bun": {"point_centre": [81, 70], "radius": 2}}) |
| | # Adding a serving bowl in the middle of the table world_mem.append({"serving_bowl": {"point_centre": [60, 55], "radius": 5}}) |
| | I will request to generate a new rendered image by the *Semantic World Memory* to check for consistency and identify further missing elements. |
| | |
| | world_mem = [ |
| | {"greg": {"point_centre": [43, 74], "radius": 7}}, |
| | {"pam": {"point_centre": [81, 74], "radius": 7}}, |
| | {"jack": {"point_centre": [108, 43], "radius": 7}}, |
| | {"table": {"point_top_left": [22, 24], |
| | "point_bottom_right": [96, 62]}}, |
| | {"plate": {"point_centre": [32, 46], "radius": 6}}, |
| | {"plate": {"point_centre": [43, 55], "radius": 6}}, |
| | {"plate": {"point_centre": [80, 55], "radius": 6}}, |
| | {"plate": {"point_centre": [89, 44], "radius": 6}}, |
| | {"bun": {"point_centre": [31, 49], "radius": 3}}, |
| | {"glass": {"point_centre": [51, 46], "radius": 3}}, |
| | {"glass": {"point_centre": [73, 46], "radius": 3}}, |
| | ] |

The last part of the table provides an example for the enhanced scene description created by the LMM module 11. This enhanced scene description can then be stored in the semantic world memory 12 in order to be available for future use.

This approach is mainly intended to improve the reasoning for autonomous agent actions, like grasping, pushing, pouring, placing or moving. The LMM module 11 can also deal with high level instructions, like identifying the best target location to move a *bun* to *Greg.* Based on the RGB information, coupled with metric information, the system could infer the best possible target location where Greg can reach it and if maybe an additional plate might be needed before placing the *bun.*

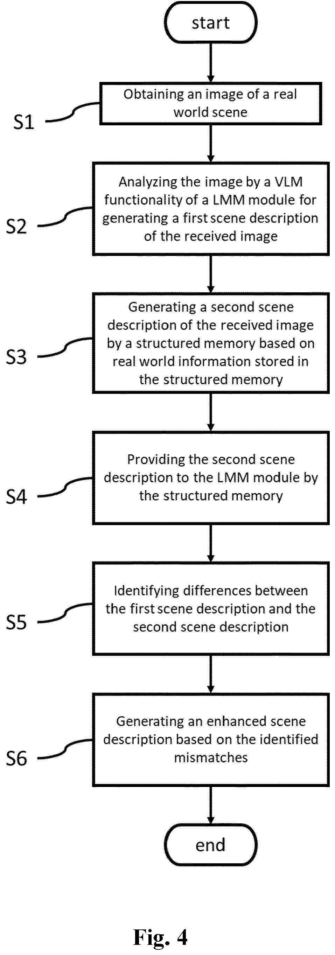

Figure 4 is a flowchart of a method according to an embodiment of this application.

It is shown a step S1 for obtaining an image of a real world scene, by image providing means.

It is shown a step S2 for analyzing the image by the VLM functionality of the LMM module for generating a first scene description. Generating the first scene description by the LMM module could be a separate step as well.

It is shown a step S3 for generating a second scene description of the received image by a structured memory based on real world information stored in the structured memory.

It is shown a step S4 for providing the second scene description to the LMM module by the structured memory.

It is shown a step S5 for identifying differences between the first scene description and the second scene description.

It is shown a step S6 for generating an enhanced scene description based on the identified mismatches.

For step S1 it is referred to the detailed description above of the camera 13 and the image providing means which completely describes the functionality of the indicated step in its entirety. It should be noted that the indicated step is independent of the executing device.

For steps S2, S5 and S6, it is referred to the detailed description above of the LMM module 11 which completely describes the functionality of the indicated steps in its entirety. It should be noted that the indicated steps are independent of the executing device.

For steps S3 and S4, it is referred to the detailed description above of the semantic world memory 12 which completely describes the functionality of the indicated steps in its entirety. It should be noted that the indicated steps are independent of the executing device.

## Claims

1. System (1) for analyzing an image of a real world scene, the system (1) comprising:
image providing means (13) for obtaining the image of the real world scene, a large multimodal model LMM module (11) providing a large language model LLM functionality and a visual language model VLM functionality, wherein the LMM module (11) is configured to analyze the image using its VLM functionality for generating a first scene description of the received image, a structured memory (12) for storing real world information, wherein the structured memory (12) is connected to the LMM module (11) and configured to generate a second scene description of the received image based on the stored real world information and to provide the description to the LMM module (11), wherein the LMM module (11) is configured to identify differences between the first scene description and the second scene description and to generate an enhanced scene description based on the identified mismatches.

2. System (1) according to claim 1, wherein the generation of the first scene description is based on the image and an additional image, comprising the image of the real world scene and semantic information of the real world scene.

3. System (1) according to any of the preceding claims, wherein the LMM module (11) is further configured to update semantic and/or metric information of the identified mismatches in the enhanced description.

4. System (1) according to any of the preceding claims, wherein the LMM module (11) is further configured to initiate the generation of the first scene description and the generation of the enhanced scene description by textual instructions provided to the LLM functionality.

5. System (1) according to any of the preceding claims, wherein the LMM module (11) is further configured to request further information from the VLM functionality and/or the structured memory (12) and to include this further information in the generation of the enhanced scene description.

6. System (1) according to claim 5, wherein the LMM module (11) is further configured to request further information from the VLM functionality and/or the structured memory (12) until the generated enhanced scene description to which this further information is included is consistent with the first scene description or until said enhanced scene description is sufficient for performing a certain task by a robot.

7. System (1) according to any of the preceding claims, wherein the LMM module (11) is configured to provide the enhanced scene description to the structured memory (12) to update the stored real world information.

8. System (1) according to any of the preceding claims, wherein the structured memory (12) is further configured to store task information for performing a certain task by a robot.

9. System (1) according to any of the preceding claims, wherein the image providing means is a camera (13), and the system (1) is further comprising a localization module (14) providing at least position information and orientation information of the camera (13).

10. System (1) according to claim 9, wherein the structured memory (12) is further configured to generate the second scene description additionally based on the position information and orientation information of the camera (13).

11. System (1) according to any of the preceding claims, wherein the second scene description includes a textual description and/or a scene layout.

12. System (1) according to claim 11, wherein the textual description and/or the scene layout include metric and/or semantic information.

13. System (1) according to any of the preceding claims, wherein the first scene description includes a textual description.

14. System (1) according to any of the preceding claims, wherein the LMM module (11) is configured to translate received images and/or scene layouts in case that the second scene description includes a scene layout into text information using its VLM functionality.

15. Assistance system or robot including the system (1) according to any one of claims 1 to 14.
